# EUROPEAN PATENT APPLICATION

(11) **EP 2 959 951 A1**
(43) Date of publication of application: **30.12.2015**
(21) Application number: 14174530.7
(22) Date of filing: 26.06.2014
(51) Int. Cl.: B01D 1/26, B01D 1/28, B05B 5/025

(54) **Multiple effect distillation**

(71) Applicant: High Voltage Water BV, 1171 PK Badhoevedorp (NL)
(72) Inventor: Agostinho, Luewton Lemos Felicio, 1171 PK Badhoevedorp (NL); Gordon, Ross James, 1171 PK Badhoevedorp (NL)
(74) Representative: De Vries & Metman

(57) **Abstract**

Multiple effect distillation reactor and process. The reactor comprises a plurality of stages with a spray assembly and one or more evaporators operatively connected to a supply of a heating medium. The spray assemblies comprise electrospray nozzles configured to spray charged droplets. The evaporators are connected to chargers for electrically charging the evaporators with a charge opposite to the charge of the sprayed droplets.

## Description

The invention pertains to a reactor and a method for multiple effect distillation (MED).

Multiple-effect distillation is a distillation process often used for sea water desalination. The MED process includes multiple stages or "effects". In each stage saline feed water is sprayed on tubular evaporators heated by steam flowing through the evaporator tubes. Part of the sprayed water evaporates and composes steam which feeds evaporator tubes of a subsequent stage. Once flowing through the evaporator tube the steam loses heat resulting in partial condensation. This releases thermal energy which heats and evaporates sprayed saline feed water collected on the evaporator tube. The condensed water flows from the evaporator tubes to a distillate reservoir. Since, from the second stage on, each stage reuses thermal energy from a previous stage, energy consumption of the process is low, e.g., 1,7 kW.h per m³ of produced distilled water. A conventional MED reactor comprises 8 to 16 stages.

The non-evaporated volume of water in each stage passes between the evaporator tubes and is collected as brine. It is generally drained into a next stage, where it may flash off to generate additional vapor.

The evaporators should be arranged to maximize the contacting area for contacting sprayed feed water. This requires relatively large reactor space per volume of sprayed feed water.

A problem occurring with MED reactors is scale formation on the evaporator tubes. Scale formation in MED reactors hinders heat transfer process, increases specific energy consumption and reduces production capacity. It also creates costs due to allowance for scale formation by over-sizing heat transfer surface area and due to scale prevention methods, cleaning methods, and production losses during plant shutdown. Scaling occurs on the outside of the tubes, which hinders use of mechanical cleaning methods such as metallic ball cleaning systems.

In order to prevent scaling, the evaporator tubes should be fully wetted and dry spots should be prevented. Lower evaporator tubes are typically harder to wet than upper tubes of an evaporator tube bundle and particularly the lower sides of the tubes are difficult to wet and prone to scaling.

It is an object of the invention to provide a reactor for the treatment of water, with improved efficiency, enabling a compact design and reducing the risk of scaling.

The object of the invention is achieved with a multiple effect distillation reactor, comprising a plurality of stages, at least part of the stages comprising a spray assembly and one or more evaporators operatively connected to a supply of a heating medium, such as steam. The spray assembly comprises electrospray nozzles configured to spray charged droplets. The evaporators are connected to one or more chargers for electrically charging the evaporators with a charge opposite to the charge of the sprayed droplets.

Less evaporation surface needs to be used since the charged droplets can be manipulated to collide with the evaporator surface. This allows a more compact evaporator bundle consuming less reactor space.

The evaporators may for example include evaporator tubes or similar channels for transporting a heating medium, such as steam. The evaporator tubes can for example form a bundle of parallel tubes or tube sections, or a spiral or any other suitable configuration.

The reactor can be provided with a control unit for performing a process for desalination of seawater. The control unit can for example be programmed to manipulate the sprayed and charged droplets, the droplet deposition rate, the droplet size or the simple-jet mode (M. Cloupeau and B. Prunet-Foch, Electrohydrodynamic spraying functioning modes: A critical review, Journal of Aerosol Sciences, Vol. 25, p. 1021 - 1036, 1994) or other relevant flow control parameters.

By manipulating the sprayed liquid wetting of the evaporator tubes can be increased. Particularly the lowers sides of the electrically charged evaporator tubes are easier to wet. The evaporator tubes can be covered with a liquid film of a more even thickness.

By varying the droplet's charge, deposition on the evaporator surface can be controlled. This allows effective control of the film thickness on the evaporator tubes. Reduction of water film thickness improves heat transfer. Such system can allow a parallel sprayed wetting rate below 100 L.m⁻¹.h⁻¹.

The droplet deposition rate can be such that the liquid flows around each tube as a closed film curtain to a lower tube instead of dripping down. This results in improved wetting rate with the same total coverage (100% of the available area) as obtained in current systems. This decreases the total sprayed volume without increasing the risk for scaling. Optionally, the potential difference between the sprayed droplets and the evaporator tubes may vary between the tubes, in particular the potential difference may be higher for lower tubes. This promotes a more even distribution of the collected liquid over the upper and lower tubes.

In an exemplary embodiment, at least one of the stages may comprise non-evaporative surfaces provided with a charger for applying a charge corresponding to the charge of the sprayed droplets. This causes repulsion of the charged droplets and reduces droplet deposition on other places than the evaporator.

A further advantage of electrically charging the evaporator tubes is the protection it provides against corrosion.

The flow rate per nozzle is a function of applied potential, i.e. a balance of electrical and inertia forces has to be achieved. Current flow rates are for example 250 - 500 ml/hour per nozzle, e.g., 300 - 400 ml/hour per nozzle. The potential difference between the nozzles and their respective counter electrodes can for example be about 2 - 10 kV. The total current spent to apply the potential may for example be around 0.1µA.

Good distillation efficiency can for example be achieved with droplets having an average particle diameter of about 0.5 - 0.7 mm. Average particle diameter is a function of the nozzle inner diameter, electric field intensity, applied flow rate and liquid physical properties. These droplets can for example be obtained with a flow rate of about 300 - 450 ml/h combined with a potential difference of 5 - 8 kV.

Optionally, the reactor may comprise one or more vapour compressors to compress supplied and/or recycled steam. By compressing steam pressure and temperature of the steam are increased. Steam can be compressed by thermocompression or mechanical vapour compression, such as vapour compression (VC) or vacuum vapour compression (VVC). In VC systems the evaporation effect takes place at manometric pressure, and in VVC systems evaporation takes place at sub-atmospheric pressures, e.g., under vacuum.

The disclosed MED reactor and process can be used for separating metal salts, such as alkali salts, in particular sodium chloride, from water. The MED reactor and process are particularly useful for the desalination of water, such as brackish water or seawater. It has been found that for every 10 liter of sea water, about two liter of fresh water can be produced. This is a 20% recovery rate, while in prior art systems his ratio is typically about 10 %.

An exemplary embodiment of a multi effect distillation reactor is shown in the accompanying drawings.
- Figure 1:: shows a schematic representation of an exemplary MED reactor;
- Figure 2:: shows a schematic representation of an exemplary spray assembly of an MED reactor.

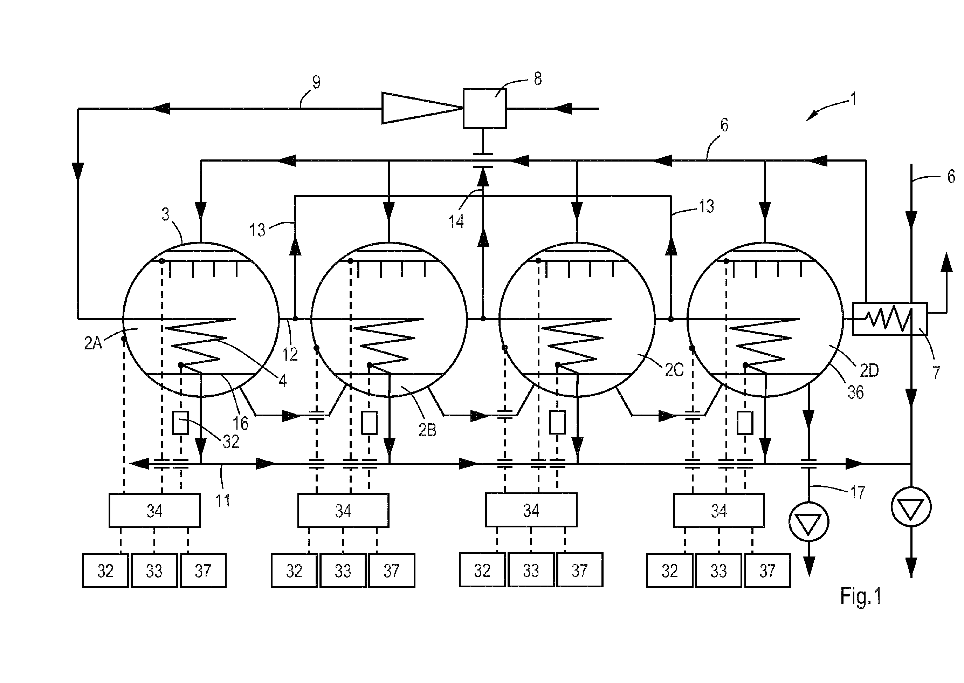

Figure 1 shows a schematic representation of a multiple effect distillation (MED) reactor 1. The reactor 1 comprises a plurality of effects or stages 2A-D. The reactor 1 may have any suitable number of stages. Generally, MED reactors have about 8 - 16 stages.

Each stage 2 comprises a seawater spray assembly 3 at its top and a bundle of evaporator tubes 4 below the seawater spray assembly 3.

The seawater spray assemblies 3 are connected to a seawater supply line 6. Seawater is first supplied to a pre-heater 7 comprising a heat exchanger for pre-heating the seawater, e.g., to a temperature of about 80 °C. The preheated seawater is then distributed via the seawater supply line 6 to the various stages 2A-D.

Steam from a steam generator (not shown) is supplied and mixed with recycled steam in a thermo-compressor 8. The steam mixture is subsequently fed via a steam supply line 9 to the evaporator tubes 4 of the first stage 2A. The steam heats the evaporator tube bundle 4 and condenses. Condensed steam is subsequently discharged from the stage 2A and collected via a condensate collection line 11.

Sprayed seawater is collected on the evaporator tubes 4 to evaporate. The generated steam is discharged via a transfer line 12 where it can be returned to the thermocompressor 8 via line 13 or it can continue to the next stage 2B. The steam mixture is then passed to the evaporator tubes 4 of a next stage 2B. The steam mixture serves as the heating medium for the evaporator tubes 4, where it condenses. The condensate is discharged and collected via the condensate collection line 11. Steam generated in the final stage 2D is discharged to the heat exchanger 7 for pre-heating freshly supplied seawater. Subsequently, it is collected via the condensate collection line 11 as desalinated fresh water.

At some positions in the reactor 1 steam can be re-heated and recirculated from a transfer line 12 via a recirculation line 14 to the thermo-compressor 8.

Brine is collected in the bottom section 16 of the stages 2. Brine from a stage 2A-C is discharged to a next stage 2B-D to flash off for generating additional vapor. At the final stage 2D the brine is discharged via a discharge line 17.

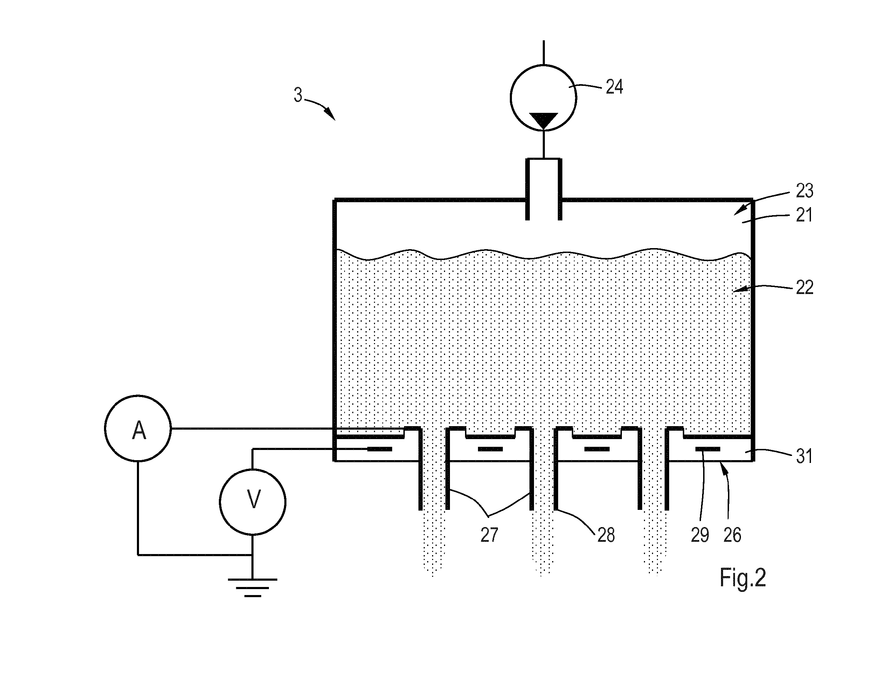

An exemplary embodiment of the spray assembly 3 is shown in Figure 2. The assembly 3 is configured to spray seawater by electrohydrodynamic atomization and comprises a seawater reservoir 21 where seawater 22 is collected via a central seawater supply (not shown). The reservoir 21 further contains air 23 pressurized by means of a pump 24 to a pressure of about 1.2 - 1.6 bar.

The reservoir 21 comprises a bottom 26 with an array of evenly distributed metallic electrospray nozzles 27. In Figure 2, a row of three electrospray nozzles 27 is shown. The number of electrospray nozzles 27 will typically be larger, e.g., 100 - 500 nozzles. The electrospray nozzles 27 can for instance produce a flow rate of about 250 - 500 ml/hour per nozzle.

The electrospray nozzles 27 have a tubular outlet 28 surrounded by a metallic ring shaped counter electrode 29. The rings 29 and the electrospray nozzles 27 are separated by an insulating layer 31. The metallic electrospray nozzles 27 are grounded and electrically connected to the associated counter electrode rings 29, which are kept at a selected potential, e.g., of 6 - 8 kV.

Due to the back pressure of the pressurized air 23 in the reservoir 21 the seawater is sprayed via the electrospray nozzles 27. Flow rate distribution over the electrospray nozzles 27 can be controlled by adjusting the pressure of the pressurized air 23. The size of the sprayed droplets can be adjusted by manipulating the potential difference.

The sprayed droplets are electrified, e.g., with about 10 - 20 % of their Raleigh limit.

The evaporator tubes 4 are electrified with a charge opposite to the charge of the droplets. To this end, the evaporator tubes 4 are connected to one or more charger units 32.

The sprayed charged droplets are attracted by the oppositely charged evaporator tubes 4. A larger part of the droplets is collected by the charged evaporator tubes 4 and the evaporator tubes 4 are better wetted. Moreover, also the lower evaporator tubes 4 and the lower sides of the evaporator tubes 4 are effectively wetted and the risk of dry spots and scaling is substantially reduced.

In the shown embodiment, the charger 32 is connected to the lower section of the evaporator tube bundle 4. As a result the potential difference between the droplets on the one hand and the lower evaporator tubes 4 on the other hand is larger than with the higher evaporator tubes 4. This helps to compensate for the uneven wetting caused by differences in distance between the spray assembly 3 and the respective evaporator tubes 4.

A power supply 33 is used to supply potential to the counter electrode rings 29 and to electrically charge the evaporator tubes 4 in the various stages 2A-D.

The reactor 1 also comprises a control unit 34 for controlling the electrical field of the electrospray nozzles 27 to manipulate the droplet size and the droplet deposition rate. The control unit 34 can also be used to control the chargers 32 of the evaporator tubes in the various stages 2A-D, e.g., to optimize wetting of the evaporator tubes 4.

To reduce droplet deposition on other places than the evaporator, non-evaporative surfaces 36 of the interior of each stage 2A-D are provided with a charger 37 for applying a charge corresponding to the charge of the sprayed droplets. This causes repulsion of the charged droplets.

## Claims

1. Multiple effect distillation reactor comprising a plurality of stages, at least part of the stages comprising a spray assembly and one or more evaporators operatively connected to a supply of a heating medium, wherein the spray assembly comprises electrospray nozzles configured to spray charged droplets and wherein the evaporators are connected to one or more chargers for electrically charging the evaporators with a charge opposite to the charge of the sprayed droplets.

2. Reactor according to claim 1, comprising a control unit programmed to manipulate the charge of the sprayed droplets and/or the charge of the evaporators.

3. Reactor according to claim 1 or 2, wherein at least one of the chargers are connected to a lower evaporator.

4. Reactor according to any one of the preceding claims, wherein at least one of the stages comprises non-evaporative surfaces provided with a charger for applying a charge corresponding to the charge of the sprayed droplets.

5. Reactor according to any one of the preceding claims, wherein the evaporators include evaporator tubes.

6. Reactor according to claim 5, wherein the evaporator tubes are arranged as a bundle or a spiral.

7. Reactor according to any one of the preceding claims, comprising at least one vapour compressor.

8. Process for desalination of water using a multiple effect reactor according to any one of the preceding claims.

9. Process according to claim 8, wherein the charge of the droplets is adjusted to control a wet film thickness on the evaporator tubes.

10. Process according to claim 8 or 9, wherein the droplet deposition rate is such that sprayed liquid collected on an evaporator flows around the evaporator to a lower evaporator as a closed film curtain.

11. Process according to claim 8, 9 or 10, wherein the potential difference between the sprayed droplets and the evaporators varies between the evaporators.

12. Process according to claim 11, wherein the potential difference between the sprayed droplets and the evaporators is higher for lower evaporators.

13. Process according to any one of claims 8 - 12, comprising the step of mechanical vapour compression.
